# EUROPEAN PATENT SPECIFICATION

(11) **EP 1 797 772 B1**
(45) Date of publication and mention of the grant of the patent: **03.12.2008**
(21) Application number: 05027202.0
(22) Date of filing: 13.12.2005
(51) Int. Cl.: A23L 1/00, A23L 2/40

(54) **Self-foaming liquid culinary aids and processes**
Selbstschäumende Küchenhilfsmittel und Verfahren
Aides culinaires et procédés auto-moussantes

(43) Date of publication of application: 20.06.2007
(73) Proprietor: Nestec S.A., 1800 Vevey (CH)
(72) Inventor: Reh, Christoph, CH-1066 Epalinges (CH); Bezelgues, Jean-Baptiste, CH-1066 Epalinges (CH); Beaulieu, Martin, Rimouski (Chébec) (CA)
(74) Representative: Rupp, Christian

(56) References cited:
- US-A- 4 206 244
- US-A1- 2003 219 522
- US-B1- 6 461 650

## Description

### Field of the Invention

The invention relates to natural-like self-foaming liquid culinary aids and methods of making and using the same. More particularly, it relates to self-foaming liquid culinary aids that include a first liquid that includes an edible acid component and a second liquid that includes an edible salt, and methods.

Note that in the framework of the present invention the term "culinary aid" is not limited to aids which are provided completely separate to a food product, but does also encompass aids where at least one component of the aid is actually present in and part of a food product. Particularly the acid component of the aid according to the invention can be part of a food product and can be one of those acids which are usually present in certain food products anyway.

### Background of the Invention

A variety of methods are known for producing a foam layer on top of beverages, such as coffee. A primary example is the standard cappuccino coffee. Cappuccino-style coffees have a lower layer made of a coffee beverage and an upper layer of steamed frothy milk or cream. The coffee layer is made first and put into the beverage container and then the milk or cream is steamed and aerated to produce a froth of foam which is poured on the coffee layer. Other speciality coffee drinks are made similarly.

Conventional dry mix instant hot cappuccino compositions include a coffee component, a foaming creamer component, an optional sweetener component, together with other optional compositions such as flavor, color, and foam stabilizer components. The compositions are typically provided as a particulate powder or granulate composition in a hot liquid, such as water or milk. Sweetener, if not present in the composition, is normally added when the beverage is prepared. Hot cappuccino beverages have a substantial and characteristic foam on the top surface of the beverage usually provided by steamed milk in brewed cappuccinos and by particulate dry mix foaming creamers in instant cappuccinos.

U.S. Patent No. 4,206,244 discloses a dry powder mix to be combined with water and which upon reconstitution yields a carbonated liquid yogurt.

Foaming beverages are popular because the whole beverage, complete with foam, is prepared in a single step, such as in instant cappuccino-style coffees. Such beverages are described in U.S. Patent No. 5,882,716, U.S. patent 6,048,567, U.S. patent 6,174,557, U.S. patent 6,290,997, U.S. patent 6,569,486, U.S. publication no. 2003/0157235, U.S. publication no. 2003/0219522, International publication no. WO 00/56163 and JP publication no. 2003-000210. These pre-formed foaming beverages, however, so not allow the consumer the flexibility of tailoring the beverage according to personal preferences, such as the type of coffee or other beverage used. In addition, many coffee drinkers prefer fresh brewed coffees over instant coffee or coffee from concentrate.

U.S. patent 5,350,591 discloses a foaming creamer composition, in the form of a dry powdered mixture that contains components for generating carbon dioxide. EP 0 796 562 discloses a particulate dry mix foaming creamer that does not require incorporation of a gas for creating cappuccino foam. The foam is instead obtained by mixing gluconolactone and an alkali metal carbonate or bicarbonate. This foaming creamer can be used with dry mix soluble coffee produce or liquid beverages such as brewed coffee. It is said that all additives other than gluconolactones either cause formation of floating aggregates or suffer from incomplete solubility with resultant precipitation, saltiness, or other apparent flavor or texture changes, insufficient acidity to drive reaction with bicarbonate to generate adequate foam, or insufficient acidity to maintain original beverage pH.

Other dry creamer formulations that include a foaming agent are also widespread. Powdered or dry creamer formulations are described in U.S. patent 4,438,147, U.S. patent 5,462,759, U.S. patent 5,721,003, U.S. patent 5,780,092, U.S. patent 6,129,943, U.S. patent 6,168,819, U.S. patent 6,589,586, U.S. publication no. 2002/0018839, U.S. publication no. 2002/0127322, International publication no. WO 97/25882, International publication no. WO 03/041506, EP 0 813 815, EP 0 885 566 and JP publication no. 08-038048. Problems associated with dry formulations include the disruption of the physical integrity or structure of the dry product that occurs during normal shipping and handling, such as when moisture contacts the dry powder. Such structural disruption often leads to less than desirable foaming properties and less than appealing sensory characteristics that detract from the freshness and appeal of the beverage.

Thus, some other types of creamers have been formulated. For example, U.S. patent 6,713,114 discloses a frozen beverage topping composition which results in a frothy or foam layer over a beverage. The beverage topping composition provides creaming and can flavor, sweeten, and slightly cool coffee and other beverages. The addition of the beverage itself produces the foam. Also, U.S. publication no. 2004/0062846 discloses powdered and liquid, dairy and non-dairy creamer compositions. These creamer compositions can be prepared in both concentrated and ready-to-use forms, and may optionally include foaming agents.

Although a number of creamers for coffee variations where especially a top foam layer is desired are known, a self-foaming agent for food products imparting an internal foamed texture to said food products is not yet provided. Thus, there remains a need for a fresh and naturally foaming liquid self-foaming agent that provides a foamed texture when added to a food product of any temperature and additionally provides an airy and light texture to the food product.

### Summary of the Invention

The invention encompasses in one aspect, self-foaming, liquid culinary aids excluding creamers including a first liquid component comprising an edible acid component, and a second liquid component comprising an edible carbonate salt, bicarbonate salt, or combination thereof, with the first and second liquids being shelf-stable and being operatively associated so that when the first and second liquids are combined carbon dioxide evolves to assist in providing the foam so that, when the liquid culinary aid is combined with a food product, the culinary aid melts or disperses in less than about 20 seconds in the food product to impart a foamed texture to the food product.

In a preferred embodiment, the first and second components are shelf-stable and physically separated during storage. Shelf-stability can be provided, for example, by chilling the components.

At least one of the first liquid component and the second liquid component may further comprise at least one structuring agent.

In one embodiment, the structuring agent is a solution selected xanthan gum, protein and polysaccharides such as maltodextrin. Preferably, both the first and the second liquid component comprise at least one structuring agent.

According to the first aspect, in one embodiment, at least one of the first or second liquids further includes a protein solution or a polysaccharide solution, or both. The protein solution preferably includes a milk powder, whey protein isolate, sweet whey powder, acid whey powder, or calcium caseinate, or a combination thereof. The polysaccharide solution preferably includes maltodextrin.

Typically, the first and second liquids each have a total solids content of 0.001 % to about 50 %. In a preferred embodiment, the first liquid includes a maltodextrin solution with a total solids content of 1 % to about 40 %. In another preferred embodiment, the second liquid includes an aqueous skim milk powder solution with a total solid content of about 1 % to 60 % or includes a protein solution made basic with about 0.5 % to 10 % of carbonate or bicarbonate salt, or a combination thereof, with a total solid content of about 1 % to 40 %.

The acid component may be an organic acid, inorganic acid, or a combination thereof. The acid component may be, for example, citric acid, ascorbic acid, tartaric acid, fumaric acid, alginic acid, malic acid, succinic acid, lactic acid, gum arabic, low-methoxy pectin, high-methoxy pectin, glucono-delta-lactone, polygalacturonic acid, monocalciumphosphate monohydrate, monocalcium phosphate, sodium phosphate, potassium phosphate, or combinations thereof. In a preferred embodiment, the acid component includes ascorbic acid.

The carbonate and bicarbonate salts used include sodium carbonate, sodium bicarbonate, potassium carbonate, potassium bicarbonate, ammonium bicarbonate, magnesium bicarbonate, calcium carbonate, or a combination thereof. In addition, the culinary aid may be in the form of either a dairy or a non-dairy culinary aid. In a preferred embodiment, the bicarbonate salt is potassium bicarbonate.

Usually, every food product which is desired to have a soft creamy texture may be foamed by the culinary aid of the present invention. Typical examples of food product are, without limitation thereto, soups, sauces, mayonnaise, milk products such as yoghurt, jams and beverages.

Advantageously, the culinary aid may be disposed in a variety of ways. In one embodiment, the first and second components are disposed in separate compartments of a single package. In another embodiment, the first and second liquids are enclosed in one compartment of a single package. When only one compartment contains the two liquids, at least one of the acid component and the salt are preferably encapsulated with a fat-based coating having a melting point of at least about 25°C. The coating may include one or more monoglycerides, diglycerides, triglycerides, acetic acid esters of mono or diglycerides, lactic acid esters of mono or diglycerides, sodium stearoyl lactylates, diacetyl tartaric acid esters of mono or diglycerides, sucrose esters, lecithin, or propylene glycol esters of fatty acids, waxes, fatty alcohols, or combinations thereof.

In a preferred embodiment, the invention relates to non-pressurized containers including the self-foaming culinary aid. Yet another aspect of the invention relates to a vending machine that includes and dispenses a plurality of products at least one of which includes the above-noted culinary aid.

The invention also relates to a method for providing a foamed food product by combining the first and second liquid components of the culinary aid of the invention to generate a sufficient amount of carbon dioxide to facilitate formation of foam to the culinary aid, and combining a sufficient amount of the culinary aid with food components to provide a foamed food product having a creaming effect therein.

In a preferred embodiment, the first and second components of the liquid culinary aid self-foam the culinary aid before combination with the food product to provide the foamed food product.

The invention encompasses a ready-to-use culinary aid, the first component is a first liquid including an edible acid component and the second component is a second liquid including an edible carbonate salt, bicarbonate salt, or combination thereof, with the first and second liquids being refrigerator-stable and being operatively associated so that when the first and second liquids are combined under a gentle stirring carbon dioxide evolves to assist in providing the foam, and wherein, when the liquid culinary aid is combined with the food product, the foam disperses in the food product to impart a soft, airy and tasty effect to the food product.

The invention also relates to a self-foaming liquid culinary aid including a first pre-culinary aid component that includes a first liquid comprising an edible acid component, and a second pre-foamer component that includes a second liquid comprising an edible carbonate salt, bicarbonate salt, or combination thereof, with the first and second liquids each being shelf-stable, physically separated, and being operatively associated so that, when the first and second liquids are combined, carbon dioxide evolves to assist in providing the foam, and wherein, when the liquid culinary aid is combined with the food product, the foam melts or disperses in the food product in less than about 20 seconds to impart a light and airy effect to the food product. In one preferred embodiment, at least one of the edible acid component and the edible salt component is encapsulated with a fat-based coating that has a melting point of at least about 25°C.

### Brief Description of the Drawings

Further features and advantages of the invention can be ascertained from the following detailed description that is provided in connection with the drawings described below:

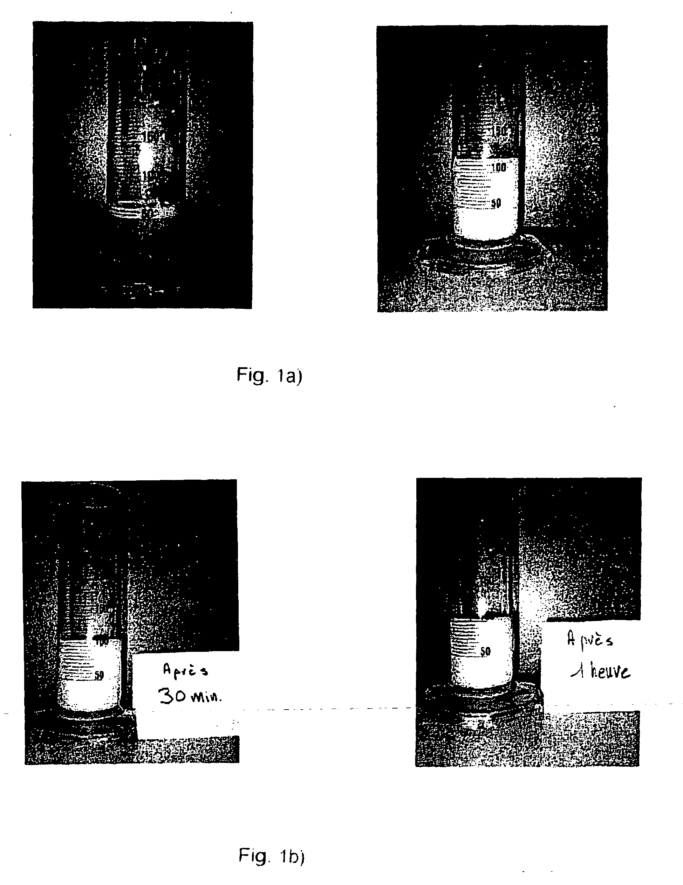

Fig. 1 illustrates the foaming properties of a culinary aid according to the present invention, when added to Sabayon sauce.

### Detailed Description of the preferred Embodiments

The present invention surprisingly and unexpectedly provides a self-foaming, natural-like liquid culinary aid that provides a pleasant, creamy, light texture to a food product, thereby enhancing the visual appeal and the flavor of the food product. The culinary aid is ready-to-use and is readily dispersible in both hot and cold food products to provide stably foamed food products having an airy and light texture without the use of complicated equipment or machinery. Food products that may be used in combination with the culinary aid include, for example, any kind of soups, sauces, mayonnaise, milk products such as yoghurt, desserts such as jams and beverages and the like, or any combination thereof. Preferred food products include soups, sauces, mayonnaise, yoghurts and jams or a combination thereof.

Accordingly, the present invention relates to a self-foaming, liquid culinary aid that includes a first and second component such that when combined with a water-containing food product, the culinary aid melts or disperses in less than about 20 seconds to import a foamed texture to the food product.

In one simple step, the end user can combine a liquid culinary aid of the invention with a food product to provide a stably foamed product having an airy, light and pleasant texture. The freshness of the foamed product can be achieved by using culinary aid components that do not tend to denature, i.e., the natural-like culinary aid of the invention can be substantially free or entirely free of proteins or other components that denature. Thus, even components from milk, cream, or other natural components can be included in forming the culinary aid of the invention. The amount of aeration generated by the self-foaming culinary aid can be readily determined by those of ordinary skill in the art, particularly with reference to the description of the invention herein.

The culinary aid of the invention is an excellent agent which is especially designed for the food service industry. Nevertheless, due to its simple application, even the regular consumer is conveniently enabled to foam the desired food product, right in his own kitchen, to provide aerated, light and tasty food products.

The culinary aid may be a dairy or non-dairy culinary aid. This advantageously benefits those who prefer to minimize or avoid the intake of dairy products, e.g., lactose intolerant persons, or the like. Additionally, the liquid culinary aids of the present invention, whether dairy or non-dairy, have the desirable benefit of having a longer shelf-life. The inventive culinary aids can be stored with or without refrigeration. Preferably, the components used do not require refrigeration, i.e., they are shelf-stable, and are formulated to be suitable for long-term, shelf storage without refrigeration, for example, for at least about 3 months, preferably at least about 6 months. The natural-like liquid culinary aids of the invention can even include a portion of certain components of fresh milk if desired, or the culinary aids can be substantially or entirely free of the perishable components typically found in fresh milk to increase shelf-life while maintaining the foaming enhancing benefits.

The culinary aid of the invention can also be at least substantially fat-free, or preferably entirely fat-free, to provide the flavor, texture, and visual benefits. Preferably, the culinary aid can also contain ascorbic acid and therefore it can be a source of water soluble vitamin. In self-foaming culinary aids, the ascorbic acid can surprisingly act both to provide a nutritional benefit and to provide the foam in combination with an edible carbonate salt, bicarbonate salt, or combination thereof.

The culinary aid is a self-foaming, liquid culinary aid that typically includes a first liquid that includes an edible acid component and a second liquid that includes an edible salt. The liquids should be at least substantially, preferably entirely, miscible with each other, and should be stable when acidified or alkalized. The edible salt typically includes a carbonate salt, bicarbonate salt, or a combination thereof. The first and second liquids are combined, carbon dioxide evolves and a white foam is produced. Then the liquid culinary aid is combined with, or generated in, a food product foam disperses in the food product to impart a foaming to the food product. The dispersing can occur as a result of any suitable chemical or physical process, and typically involves melting or dissolving of the foam into the liquid food product. Fig. 1 illustrates both the foaming and stabilizing effects of the culinary aid when added to a Sabayon sauce.

Fig. 1a shows in the left-hand picture 50ml Sabayon sauce filled in a beaker. After having added the culinary aid of the invention (10ml each of acid component and salt component) the Sabayon sauce expanded by at least the double volume to give a smoothly aerated Sabayon sauce (right-hand picture) having a pleasant airy texture. Fig. 1b shows that the aerated Sabayon sauce is extremely stable by observing that the volume of the product did not change even after one hour following the addition of the culinary aid of the invention.

The foam is typically formed instantaneously by mixing, for example, equivalent volumes of the first and second liquids. Although one of the first or second liquids may be present in a larger amount than the other, each must be present in an amount sufficient to generate enough foam to provide a visible foam which disperses within the food product to provide the beneficial aeration enhancement to the food product. The foam may be formed in a separate container, and then poured onto the food product. Optionally, the foam may be generated by pouring the two liquids separately into the food product or combining one liquid component with a food product and then adding the second liquid component to form the foam in situ. In these optional embodiments where the foam is generated in situ, foam obtained will be of substantially the same color as the food product. It should be understood for all embodiments of the invention that the liquid culinary aid may be provided to a container first, followed by the food product; by the food product first and then the liquid culinary aid; by alternating portions of food product and culinary aid; or any other suitable method for combining the food product and culinary aid. The first and second liquids preferably have the capability to produce a large volume of white, fine, and preferably homogenous foam after mixing. The large amount of carbon dioxide that is generated by the acid-base reaction allows for the aeration of the mixture that is formed. The acid-base reaction is represented chemically below:

HA + XHCO₃ → XA + H₂O + CO₂

HA corresponds to the acid component in the first liquid and XHCO3 corresponds to the basic salt in the second liquid. Combining the two liquids yields a salt, XA, water and carbon dioxide. For the best results, a sufficiently large volume of carbon dioxide should be released rapidly. This volume should be sufficiently large to evolve enough gas to foam a majority, preferably substantially all, and more preferably all, of the liquid culinary aid that is present.

According to one embodiment, at least one of the first or second liquids further comprises a protein solution or a polysaccharide solution, or both.

In another embodiment, at least one of the first or second liquids further includes at least one structuring agent selected from xanthan gum, a protein solution or a polysaccharide solution, xanthan gum being preferred.

The protein solution may be any solution of foamable or foaming proteins. The protein solution may include egg and milk proteins, plant proteins, microbial proteins, or mixtures thereof. The protein solution preferably includes a milk powder, whey protein isolate, sweet whey powder, acid whey powder, or calcium caseinate, or a combination thereof. The polysaccharide solution may include any suitable carbohydrate, and for example starches, celluloses, alginates, and the like. Preferably, the polysaccharide solution includes a maltodextrin. Suitable amounts of protein solution, polysaccharide solution, sweetener, and flavorings can be included as desired or in amounts readily determined by those of ordinary skill in the art, particularly with reference to the description of the invention herein.

Optionally, one or both of the first and second liquids include one or more sweeteners and/or flavorings depending on the food product to be foamed. The sweetener may be a non-caloric, low caloric, or caloric sweetener. Sweeteners impart a wide range of overall sweetness to the culinary aid. Non-caloric or low-caloric sweeteners generally include a high intensity sweetener and a bulking agent. Bulking agents can help maintain the overall structure and integrity of the culinary aid while imparting little or no sweetness. Caloric sweeteners generally include sugars or mixture of sugars, such as fructose, sucrose, dextrose, maltose, lactose, high fructose corn syrup solids, invert sugar, sugar alcohols, and the like, as well as mixtures of these sweeteners. Flavorings are used to deliver one or more specific flavors to the food product. These flavorings may be natural or artificial in origin.

The first and second liquids typically each have a total solid content of 0.001% up to about 50%, preferably about 1% to 48%, more preferably about 20% to 40%. In one embodiment, the first liquid includes a whey protein solution (e.g. maltodextrin) with a total solid content of about 5% to 40% or a calcium caseinate solution with a total solid content of about 0.001% to 20%, or both. The first liquid is preferably acidified with an organic or inorganic acid component sufficient to acidify the culinary aid to promote formation of foam with a carbonate or bicarbonate salt. Thus, preferably, the first liquid is preferably acidified with an acid component to a pH of about 1 to 6, preferably 2 to 5. An exemplary acid component pH is about 2.5. In another embodiment, the second liquid includes an aqueous skim milk powder solution with a total solid content of about 1% to 60% or a protein solution made basic with about 0.5% to 10% of carbonate or bicarbonate salt, or a combination thereof, with a total solid content of about 1% to 40%. An acid component, such as citric acid, however, cannot be added to the second liquid without the precipitation of proteins. Thus, the acid component is preferably included in the first liquid with, for example, a whey protein solution to minimize or avoid precipitation of any components, which can undesirably affect the flavor and/or visual appearance of a food product and culinary aid combination. Indeed, the culinary aid of the present invention is substantially free of or entirely free of, and when combined with a food product will still be substantially free of or entirely free of, precipitates. Preferably, all components of the culinary aid, food product, and combination thereof, will be substantially or entirely soluble.

The acid component may include one or more organic acids, inorganic acids, or a combination thereof. Organic acid salts and derivatives, such as anhydrides, esters or lactones may also be used. Exmaples of suitable organic acids or salts include citric acid, ascorbic acid, tartaric acid, fumaric acid, alginic acid, malic acid, succinic acid, gum arabic, low-methoxy pectin, high-methoxy pectin, glucono-delta-lactone, polygalacturonic acid, potassium bitartrate, monocalcium fumarate, monopotassium fumarate, monosodium citrate, disodium citrate, sodium alginate, and potassium alginate. Examples of suitable inorganic acids include monocalcium phosphate monohydrate, anhydrous monocalcium phosphate, sodium acid pyrophosphate, sodium aluminum phosphate, dicalcium phosphate dihydrate, potassium metaphosphate, monosodium phosphate, monopotassium phosphate, and sodium hexametaphosphate. Preferably, the acid component includes citric acid, ascorbic acid, tartaric acid, fumaric acid, alginic acid, malic acid, succinic acid, lactic acid, gum arabic, low-methoxy pectin, high-methoxy pectin, glucono-delta-lactone, polygalacturonic acid, monocalcium phosphate monohydrate monocalcium phosphate, sodium phosphate, potassium phosphate, or combinations thereof.

The carbonate and bicarbonate salts include sodium carbonate, sodium bicarbonate, potassium carbonate, potassium bicarbonate, ammonium bicarbonate, magnesium bicarbonate, or calcium carbonate, or a combination thereof.

The acid-base reaction preferably produces a large volume of foam in a reasonable period of time, for example, less than about 20 seconds, preferably less than about 10 seconds, and more preferably less than about 5 seconds after mixing of the two liquids. In an exemplary embodiment, substantially all of the foam is formed immediately within three seconds after combining the first and second liquids. Preferably, the volume of foam produced is about 2 to 40 volume percent of the food product, more preferably about 5 to 20 volume percent of the food product. The acid-base reaction should not, however, excessively acidify the food product, particularly to the extent that undesirable tastes are introduced into the food product flavor as a result of the inventive foaming culinary aid.

In addition, combination of the first and second liquids for the production of carbon dioxide in the liquid culinary aid preferably will not produce off-flavors and/or a salty taste. Importantly, their combination preferably minimizes or avoids the formation of floating aggregates caused by, for example, protein coagulation or precipitation or formation of insoluble salts. The use of a stoichiometric mixture of tartaric or citric acids and a bicarbonate in a solution with dairy components will usually induce protein precipitation. Moreover, the use of pure inorganic salts can liberate free metallic cations, such as Ca²⁺, which can induce protein complexation, and the appearance of floating complexes. Thus, in one embodiment, the acid component is a binary mixture of monocalcium phosphate monohydrate and tartaric acid with a weight ratio of about 1.5:1 to 3:1, preferably about 2:1. The reaction of this binary acid mixture with a bicarbonate generally induces the formation of soluble complexes with gas formation.

Another preferred embodiment is where the acid component includes ascorbic acid, which tends to acidify the food product to a lesser extent than tartaric or citric acid, thus minimizing or preventing protein precipitation. Furthermore, the complexes are stable and do not contribute to the formation of floating aggregates. Finally, ascorbic acid has good organoleptic properties in addition to providing a nutritional benefit.

In a preferred embodiment of the invention, at least one component of the culinary aid is part of a food product.

In a particular preferred embodiment of the invention, the acid component is already part of a food product such that only the second, basic component is added to the food product.

Because the culinary aid self-foams, typically proximate in time to addition to a food product or food product components, the foaming culinary aid does not require a pressurized container, such as an aerosol can, to produce the foam. Consequently, the culinary aid can be packaged in less expensive and more environmentally-friendly containers, such as a non-pressurized container. Frequently, aerosol cans also include environmentally harmful chemicals, typically propellants, such as chlorofluorocarbons, that can damage the ozone layer. Use of non-pressurized container aids in the preservation of the environment and its resources.

The invention also includes packaging or a container including a culinary aid of the invention. The culinary aids can be packaged for use, and each package can hold a sufficient amount of the first and second culinary aid components for a single serving, or for multiple servings, or even for bulk use or food service usage. The single-serve or multi-serve packages can optionally be packed into a multi-packaged cases or cartons for shipment and sale to supermarkets, convenience stores, or the like. The package may be in the form of compartmentalized can, carton, jar, bottle, cup, or any other conventional or disposable containers used to hold liquids. For example, the container can be a plastic bottle, and preferably, a multi-layer plastic bottle. Any suitable plastic or polymer material or a combination thereof may be used to form the plastic bottle. Examples include polyesters, polyvinyl chlorides, polyethylenes, and polypropylenes. Preferably, one or more polyolefinic materials are used. In one preferred embodiment, the package is a bottle that is rigid or squeezable. In one embodiment, the culinary aid can be part of a vending machine suitable for the delivery of dairy or non-dairy culinary aid.

The liquid culinary aids can be preferably packaged in a non-pressurized container, i.e., they do not require pressurization for shipping, storage, or the like. Non-pressurized typically means at or about ambient pressure, and preferably non-pressurized culinary aids are at least substantially or entirely free of propelling gas, e.g., nitrous oxide, as this is unnecessary for foam formation. This can surprisingly permit the use of conventional packaging for foamed culinary aid products of the invention as noted above. Preferably, the container can minimize or even avoid the need for special coatings, foil packaging, vacuum-packing, or other special freshness-preserving efforts, as a non-pressurized container will typically provide suitable refrigerator stability to the foamed culinary aid of the invention. Preferably, the packaging of the culinary aid is a non-pressurized bottle or can or box of any suitable food-grade material or a multi-layer material with the innermost layer being made of food-grade material. An exemplary package is a non-pressurized bottle. The culinary aid can be packaged so that the consumer can simply open the package and add the foamed culinary aid to the food product. This embodiment can be suitable for placement and sale in vending machines.

In one embodiment, the first and second liquids of the culinary aid are disposed in at least two separate compartments of a single package. A consumer would typically open the package and pour the liquid contents of the separate compartments into another container, such as a cup, to produce the foam. Alternatively, the mixing can be done in a separate compartment of the package. Advantageously, application of shear by pressing a flexible package facilitates mixing the product. A similar effect can be achieved by a dosing pump. Thereafter, the consumer would pour the foam into a food product.

Alternatively, the package contents can be poured directly and at the same time, or sequentially into a food product or a container to form the foam in situ.

In a further embodiment of the invention, especially in the field of food service industry, the culinary aid may be prepared by mixing the acid component and the salt component in a machine working manually or automatically. The automatic machine may be equipped with a mixer or whipper. In this way, both components are mixed by pumping the streams together and using the carbonate release as mixing. The product then comes out of two, three or more compartments in quantities which need not to be proportional.

The manual machine may provide a volumetric dosing into a container for a given product volume. This makes the system adaptable to an operator for one defined menu item. This results in reduced labor cost and better control of product quality and quantity.

In another embodiment, the first and second components of the binary system are enclosed in one compartment of a single package. To prevent premature formation of the foam in the compartment, at least one of the acid component and the salt are preferably encapsulated with a fat-based coating having a melting point of at least about 25°C, preferably at least about 35°C. In one embodiment, this melting point can be at least about of at least about 45°C. The acid component and salt component are then dispersed in a liquid matrix having good foaming characteristics, such as a skim milk powder aqueous solution. At room temperature, the fat-based coating is solid and prevents the reaction of the acid component and salt. By adding a food product with a temperature higher than the melting temperature of the fat coating, the coating gradually melts over time, *e*.*g*., about 0.1 to 20 seconds, and causes the release of the acid component and/or salt, thereby causing them to react and generate the foam. The coating preferably includes one or more monoglycerides, diglycerides, triglycerides, acetic acid esters of mono or diglycerides, lactic acid esters of mono or diglycerides, sodium stearoyl lactylates, diacetyl tartaric acid esters of mono or diglycerides, sucrose esters, lecithin, or propylene glycol esters of fatty acids, waxes, fatty alcohols, or combinations thereof.

The culinary aid of the present invention may be substantially free of, and preferably entirely free of, fat/oil microparticulates or emulsifiers, or both. Advantageously, the culinary aid does not require an emulsifier to readily disperse in the hot or cold food product. Fats or oils, when used, are generally included in the culinary aid only as a coating for the acid and/or salt components.

This one compartment/single package embodiment is useful primarily only for culinary aids to be used with hot food products. Preferably, the first and second liquids are combined in a way that avoids or minimizes use of fat-based coatings with melting points of at least about 25°C so that the culinary aid can form foam rapidly even in cold food products.

In one embodiment, the salt is ground to a suitable particle size, e.g., less than about 100 nm, preferably less than about 80 µm, and more preferably less than about 50 µm, and dispersed in the coating system. The coated salt is then spray chilled, and the resulting powder dispersed in the foamable mixture.

Additionally, while less preferred, the acid component and salt may initially react in the package to form a portion or all of the foam. This could be accomplished, for example, by coating only a portion of the acid component and/or salt. In this embodiment, the consumer would not have to wait as long for the acid-base reaction to occur before enjoying the foamed food product. The consumer would simply open the package and add the foamed culinary aid to the food product. This embodiment can be suitable for placement and sale in vending machines.

The liquid components can be pasteurized or otherwise heat treated to enhance shelf-stability. The natural-like liquid culinary aid that imparts a foaming effect to the food product is preferably at least substantially dispersed, and more preferably entirely dispersed within the food product. In a most preferred embodiment, the culinary aid is uniformly dispersed within the food product. The culinary aid described herein, however, provides a foam that disperses in food products to impart an aerating effect and desirable flavor modification to the food product, while modifying the texture of the food product.

The shelf life of these liquid culinary aids, or components thereof, is at least about 60 days, preferably at least about 90 days, and more preferably at least about 120 days, or even longer at refrigerated temperatures. Refrigerated temperatures generally include those less than about 10°C, preferably less than about 6°C, while ambient temperature for shelf-stability is considered to be 20°C. The culinary aids of the invention are typically stored at temperatures greater than freezing (0°C) to facilitate their presence in liquid form.

The invention may also include a set of instructions for preparing a food product in a container, which includes instructions (such as on a label, packaging, or an insert), to dispose a food product into a selected container, and to prepare and dispose a liquid, self-foaming, natural-like culinary aid into the container or food product. Either order of disposing the food product and culinary aid may be specified, and the culinary aid can be foamed in situ by adding the acid and salt components in either order directly into the food product rather than first forming the foaming culinary aid and then combining it with the food product. The disposing of the food product or the natural-like culinary aid liquid, or components thereof, is preferably sufficient to disperse the culinary aid throughout the food product without a spoon. The set of instructions may be displayed, for example, on the package for the culinary aid. In one embodiment, it is preferred that the food product is at least about 100°C to facilitate foaming and/or dispersion. Particularly when a fat or oil encapsulant is used around one or both the acid or salt components, a warmer food product may be preferred to facilitate melting of the encapsulant and increase the generation timing and/or rate of foam. In another embodiment, a lower viscosity foamed culinary aid can be formulated to facilitate foaming and dispersion even in a cold food product, e.g., one at ambient temperature or even chilled to refrigerator temperatures.

The invention also encompasses various delivery methods and equipment, such as vending machines, for delivering the self-foaming natural-like liquid culinary aids of the present invention. In one embodiment, the invention encompasses a vending machine that includes and dispenses a plurality of products at least one of which is the culinary aid previously described. Other products included in the vending apparatus can include any suitable food product or components thereof.

The following examples are not intended to limit the scope of the invention, but merely to illustrate representative possibilities concerning the present invention.

### Examples:

### Example 1: Preparation of hot or cold aerated sauces

Hot aerated sauces , e.g "Mornay", "Bechamel", "Sabayon", "Beurre Blanc" were prepared by adding about 100 g of sauce with the dairy foam being obtained by mixing 15 ml of liquid A and 15 ml of liquid B. The compositions of the self-foaming liquids are provided below. By mixing 15 ml of each liquid A and B, about 80 to 100 ml of white and fine foam was obtained and easily mixed with the culinary sauces (the recipes described below) under a gentle manual stirring. The final sauces had an overrun about 100% and exhibited a good airy and light texture.

The same results are achieved with cold sauces like Mayonnaise, Béarnaise, Hollandaise sauces.

### Composition of the self-foaming liquids:

Solution A = first liquid (acid component)
Solution B = second liquid component (basic component)

| | ***Solution A*** | ***Solution B*** |
|---|---|---|
| Ingredients % (w/w) | | |
| **Maltodextrin DE 21** | 20.00 | 10.00 |
| **SMP (Skim milk powder)** | - | 10.00 |
| **KHCO₃** | - | 4.00 |
| **Xanthan gum** | 0.30 | 0.30 |
| **Ascorbic acid** | 1.00 | - |
| **Malic acid** | 1.50 | - |
| **TiO₂** | 0.05 | - |
| **Water** | 77.15 | 73.00 |

The sauces to be foamed have the following compositions:
**Sabayon sauce:** 4 dl. White wine, 200g sugar, 30g lemon juice, 240g egg yolk, 80 g Curaçao.
**Beurre Blanc:** 400 g butter, 100g shallot , 1.5 dl white vinegar, 2 dl white wine, salt, pepper, 1 dl 35% cream.
**Bechamel:** 60 g butter, 80 g flour, 1 lt. milk, nutmeg, pepper, salt
**Mornay:** 1 It. Sauce Béchamel, 1 dl. cream, 35% dry mass, 3 pcs egg yolk, grated Gruyère cheese
**Mayonnaise:** 1 It. Sunflower oil, 4 pcs yolk egg, 40 g mustard, 5 g salt, pepper, ½ lemon juice, 0,1 dl. Worcestershire sauce, 0,5 dl., vinegar

### Example 2: Preparation of aerated soup:

Hot aerated tomato and basil soup was prepared by adding about 100 g of hot soup with the dairy foam being obtained by mixing 15 ml of liquid A and 15 ml of liquid B. The compositions of the self-foaming liquids are provided in example 1. By mixing 15 ml of each liquid A and B, about 80 to 100 ml of white and fine foam was obtained and easily mixed with the soup under a gentle manual stirring. The final aerated soup had an overrun about 100%. The aerated soup exhibited a pleasurable airy and light texture.

Composition of the tomato/basilica soup:
Tomato/Mozzarella soup: water, tomatoes, cheese, basil, salt, pepper

### Example 3: Preparation of aerated liquid yoghurt

An aerated yoghurt was prepared by mixing about 100 g of a standard yoghurt preparation (LC1, liquid yoghurt) with 20 ml of carbonated liquid C . The composition of the liquid C is provided below. The final aerated liquid yogurt had an overrun about 100% and exhibited a good stability after one hour at room temperature.

| | ***Solution C*** |
|---|---|
| Ingredients % (w/w) | |
| **Maltodextrin DE 21** | 10.00 |
| **Skim milk powder** | 10.00 |
| **KHCO₃** | 4.00 |
| **Xanthan gum** | 0.30 |
| **Water** | 75.70 |

The composition of the yoghurt is as follows:
**Yoghurt:** Pasteurized skimmed milk, milk proteins, alimentary fibers (Inulin)

### Example 4: Preparation of aerated apricot jam for desserts:

Aerated apricot marmalade was prepared by mixing to about 100 g of hot apricot jam with 20 ml of carbonated liquid D. The foam formed by mixing liquid D and hot apricot marmalade was sweet and exhibited a good stability after 1 hour at room temperature.

This example could be extend to other fruit jams, e.g. strawberry, mango, raspberry, blackcurrant, gooseberry, orange, lemon.

| | ***Solution D*** |
|---|---|
| Ingredients % (w/w) | |
| **Maltodextrin DE 21** | 15.00 |
| **KHCO₃** | 4.00 |
| **Whey powder** | 5.00 |
| **Xanthan gum** | 0.30 |
| **Water** | 75.70 |

Composition of the apricot jam:
**Apricot jam:** sugar, water, glucose syrup, apricot concentrate, gelling agent E 440, acidifier E330, E331, E333, preservative E202, food colouring E160a, flavour, pasteurized product

The term "about," as used herein, should generally be understood to refer to both numbers in a range of numerals. Moreover, all numerical ranges herein should be understood to include each whole integer within the range. All percentages herein refer to weight rather than volume, where applicable and unless otherwise noted.

The term "substantially free," as used herein, means that no more than about 10 weight percent, preferably no more than about 5 weight percent, and more preferably no more than about 1 weight percent of the material is present. In a preferred embodiment "substantially free" means that no more than about 0.1 weight percent remains. Conversely, "substantially" as it refers to, e.g., dispersing or miscibility, and "substantially all," typically means that at least 90 weight percent, preferably at least 95 weight percent, and more preferably at least about 99 weight percent, of the material referred to. "Entirely free" typically means that at most only a trace amount of the excluded material is present, and preferably, no detectable amount is present.

Although preferred embodiments of the invention have been described in the foregoing description, it will be understood that the invention is not limited to the specific embodiments disclosed herein but is capable of numerous modifications by one of ordinary skill in the art. It will be understood that the materials used and the chemical details may be slightly different or modified from the descriptions herein without departing from the methods and compositions disclosed and taught by the present invention.

## Claims

1. A self-foaming, liquid culinary aid excluding creamers, comprising:
a first liquid component comprising an edible acid component; and
a second liquid component comprising an edible carbonate salt, bicarbonate salt, or combination thereof;
with the first and second liquids being shelf-stable and being operatively associated so that when the first and second liquids are combined carbon dioxide evolves to assist in providing the foam so that, when the components of the liquid culinary aid is combined, the culinary aid melts or disperses in less than about 20 seconds in a food product and imparts a foamed texture to the food product.

2. The culinary aid of claim 1,
wherein the first and second liquids are each shelf-stable and physically separated during storage.

3. The culinary aid of claim 1 or 2,
wherein at least one of the first or second liquids includes at least one structuring agent.

4. The culinary aid of any of claims 1 to 3,
wherein the first and the second liquid component comprise at least one structuring agent.

5. The culinary aid of claims 3 or 4,
wherein the structuring agent is a solution selected from xanthan gum, protein and polysaccharides.

6. The culinary aid of any of the preceding claims,
wherein at least one of the first or second liquids further comprises a protein solution or a polysaccharide solution, or both.

7. The culinary aid of claims 5 or 6,
wherein the protein solution comprises a milk powder, whey protein isolate, sweet whey powder, acid whey powder, or calcium caseinate, or a combination thereof, and the polysaccharide solution comprises maltodextrin.

8. The culinary aid of any of the preceding claims,
wherein the first and second liquids each have a total solids content of 0.001 % to about 50 %.

9. The culinary aid of any of the preceding claims,
wherein the first liquid comprises a maltodextrin solution with a total solids content of about 1 % to 40 %.

10. The culinary aid of any of the preceding claims,
wherein the second liquid comprises an aqueous skim milk powder solution with a total solid content of about 1 % to 60 % or comprises a protein solution made basic with about 0.5 % to 10 % of carbonate or bicarbonate salt, or a combination thereof, with a total solid content of about 1 % to 40 %.

11. The culinary aid of any of the preceding claims, where the acid component comprises citric acid, ascorbic acid, tartaric acid, fumaric acid, alginic acid, malic acid, succinic acid, lactic acid, gum arabic, low-methoxy pectin, high-methoxy pectin, glucono-delta-lactone, polygalacturonic acid, monocalcium phosphate monohydrate, monocalcium phosphate, sodium phosphate, potassium phosphate, or a combination thereof, and wherein the carbonate and bicarbonate salts comprise sodium carbonate, sodium bicarbonate, potassium carbonate, potassium bicarbonate, ammonium bicarbonate, magnesium carbonate, calcium carbonate, or a combination thereof.

12. The culinary aid of any of the preceding claims,
wherein the food product is selected from soups, sauces, mayonnaise, milk products, desserts and beverages.

13. The culinary aid of any of the preceding claims,
wherein the first and second liquids are disposed in separate compartments of a single non-pressurized container.

14. The culinary aid of any of the preceding claims,
wherein at least one of the edible acid component and the edible salt component is encapsulated with a fat-based coating that has a melting point of at least about 25°C and that is at least substantially free of microparticulated fat.

15. The culinary aid of any of the preceding claims,
wherein the coating comprises one or more monoglycerides, diglycerides, triglycerides, acetic acid esters of mono or diglycerides, lactic acid esters of mono or diglycerides, sodium stearoyl lactylates, diacetyl tartaric acid esters of mono or diglycerides, sucrose esters, lecithin, or propylene glycol esters of fatty acids, waxes, fatty alcohols, or a combination thereof.

16. The culinary aid of any of the preceding claims, wherein at least one component of the culinary aid is part of a food product.

17. A vending machine that includes and dispenses a plurality of products at least one of which comprises the culinary aid of any of the preceding claims.

18. A method for providing a foamed food product which comprises:
combining the first and second liquid components of the culinary aid of any of claims 1 to 16 to generate a sufficient amount of carbon dioxide to facilitate formation of foam to the culinary aid and
combining a sufficient amount of the culinary aid with food components to provide a foamed food product and a creaming effect therein.

19. The method of claim 18,
wherein the first and second components of the liquid culinary aid self-foam the culinary aid before combination with the food product to provide the foamed food product.

20. The method of claim 18 or 19,
wherein the food product is selected from soups, sauces, mayonnaise, milk products, desserts and beverages.

21. Use of a self-foaming, liquid culinary aid of any one of claims 1 to 16 for foaming a food product.

22. The use of claim 21,
wherein the food product is selected from soups, sauces, mayonnaise, milk products, desserts and beverages.

## Patentansprüche

1. Selbstschäumendes, flüssiges Kochhilfsmittel, ausgenommen Kaffeeweißer, umfassend:
eine erste flüssige Komponente umfassend eine essbare Säurekomponente; und
eine zweite flüssige Komponente umfassend ein essbares Karbonatsalz, Bikarbonatsalz oder eine Kombination davon;
wobei die erste und die zweite Flüssigkeit lagerbeständig sind und anwendungsbereit einander zugeordnet sind, so dass, wenn die erste und die zweite Flüssigkeit gemischt werden, sich Kohlendioxid entwickelt, um die Schaumbildung derart zu unterstützen, dass, wenn die Komponenten des flüssigen Kochhilfsmittels vermischt werden, das flüssige Kochhilfsmittel in weniger als etwa 20 Sekunden in einem Lebensmittel schmilzt oder dispergiert und dem Lebensmittel eine geschäumte Textur verleiht.

2. Kochhilfsmittel nach Anspruch 1,
wobei die erste und die zweite Flüssigkeit jeweils lagerstabil und während der Lagerung physikalisch voneinander getrennt sind.

3. Kochhilfsmittel nach Anspruch 1 oder 2,
wobei zumindest eine der ersten oder der zweiten Flüssigkeiten zumindest ein Strukturierungsmittel umfasst.

4. Kochhilfsmittel nach einem der Ansprüche 1 bis 3,
wobei die erste und die zweite flüssige Komponente zumindest ein Strukturierungsmittel umfasst.

5. Kochhilfsmittel nach Anspruch 3 oder 4,
wobei das Strukturierungsmittel eine aus Xanthangummi, Protein und Polysacchariden ausgewählte Lösung ist.

6. Kochhilfsmittel nach einem der vorstehenden Ansprüche,
wobei zumindest eine der ersten oder der zweiten Flüssigkeiten ferner eine Proteinlösung oder eine Polysaccharidlösung oder beides umfasst.

7. Kochhilfsmittel nach einem der Ansprüche 5 oder 6,
wobei die Proteinlösung ein Milchpulver, ein Molkeproteinisolat, ein Süßmolkenpulver, ein Sauermolkenpulver oder Kalziumcaseinat oder eine Kombination davon umfasst, und wobei die Polysaccharidlösung Maltodextrin umfasst.

8. Kochhilfsmittel nach einem der vorstehenden Ansprüche,
wobei die erste und die zweite Flüssigkeit jeweils einen Gesamtfeststoffgehalt von 0,001 % bis ungefähr 50 % aufweisen.

9. Kochhilfsmittel nach einem der vorstehenden Ansprüche,
wobei die erste Flüssigkeit eine Maltodextrinlösung mit einem Gesamtfeststoffgehalt von ungefähr 1 % bis 40 % umfasst.

10. Kochhilfsmittel nach einem der vorstehenden Ansprüche, wobei die zweite Flüssigkeit eine wässrige Magermilchpulverlösung mit einem Gesamtfeststoffgehalt von ungefähr 1 % bis 60 % umfasst oder eine Proteinlösung mit einem Gesamtfeststoffgehalt von etwa 1 % bis 40 % umfasst, die mit ungefähr 0,5 % bis 10 % Carbonat- oder Bicarbonatsalz oder einer Kombination davon basisch gemacht wurde.

11. Kochhilfsmittel nach einem der vorstehenden Ansprüche,
wobei die Säurekomponente Zitronensäure, Ascorbinsäure, Weinsäure, Fumarsäure, Alginsäure, Apfelsäure, Bernsteinsäure, Milchsäure, Gummiarabikum, Nieder-Methoxy-Pektin, Hoch-Methoxy-Pektin, Glucono-Delta-Lakton, Polygalakturonsäure, Monocalciumphosphat-Monohydrat, Monocalciumphosphat, Natriumphosphat, Kaliumphosphat oder eine Kombination davon umfasst, und wobei die Carbonat- und Bicarbonatsalze Natriumcarbonat, Natriumbicarbonat, Kaliumcarbonat, Kaliumbicarbonat, Ammoniumbicarbonat, Magnesiumcarbonat, Kalziumcarbonat oder eine Kombination davon umfassen.

12. Kochhilfsmittel nach einem der vorstehenden Ansprüche, wobei das Nahrungsmittelprodukt aus Suppen, Soßen, Mayonnaise, Milchprodukten, Desserts und Getränken ausgewählt ist.

13. Kochhilfsmittel nach einem der vorstehenden Ansprüche,
wobei die erste und die zweite Flüssigkeit in getrennten Kammern eines einzelnen drucklosen Behälters angeordnet sind.

14. Kochhilfsmittel nach einem der vorstehenden Ansprüche,
wobei zumindest eine der essbaren Säurenkomponenten und der essbaren Salzkomponenten mit einer fettbasierten Beschichtung verkapselt ist, die einen Schmelzpunkt von mindestens 25 °C aufweist, und die zumindest im Wesentlichen frei von mikropartikulärem Fett ist.

15. Kochhilfsmittel nach einem der vorstehenden Ansprüche,
wobei die Beschichtung ein oder mehrere Monoglyceride, Diglyceride, Triglyceride, Essigsäureester von Mono- oder Diglyceriden, Milchsäureestern von Mono- oder Diglyceriden, Natriumstearoyl-Laktylate, Diacethyl-Weinsäureester von Mono- oder Diglyceriden, Saccharoseester, Lezithin oder Propylenglycolester von Fettsäuren, Wachsen, Fettalkoholen, oder eine Kombination davon umfasst.

16. Kochhilfsmittel nach einem der vorstehenden Ansprüche, wobei zumindest eine Komponente des Kochhilfsmittels Bestandteil eines Nahrungsmittelproduktes ist.

17. Verkaufsautomat, der eine Vielzahl von Produkten enthält und ausgibt, von denen zumindest eines das Kochhilfsmittel nach einem der vorstehenden Ansprüche umfasst.

18. Verfahren zur Bereitstellung eines geschäumten Lebensmittelprodukts, wobei das Verfahren umfasst:
Mischen der ersten und der zweiten flüssigen Komponente des Kochhilfsmittels nach irgendeinem der Ansprüche 1 bis 16, um eine ausreichende Menge Kohlendioxid zu erzeugen, um die Schaumbildung durch das Kochhilfsmittel zu erleichtern, und
Mischen einer ausreichenden Menge des Kochhilfsmittels mit Nahrungsmittelbestandteilen, um ein aufgeschäumtes Nahrungsmittelprodukt mit cremigem Effekt bereitzustellen.

19. Verfahren nach Anspruch 18,
wobei der erste und der zweite Bestandteil des flüssigen Kochhilfsmittels das Kochhilfsmittel vor der Vermischung mit dem Nahrungsmittelprodukt selbst aufschäumen, um das geschäumte Nahrungsmittelprodukt bereitzustellen.

20. Verfahren nach Anspruch 18 oder 19,
wobei das Nahrungsmittelprodukt aus Suppen, Soßen, Mayonnaisen, Milchprodukten, Desserts und Getränken ausgewählt ist.

21. Verwendung eines selbstschäumenden, flüssigen Kochhilfsmittels nach einem der Ansprüche 1 bis 16, um ein Nahrungsmittelprodukt aufzuschäumen.

22. Verwendung nach Anspruch 21, wobei das Nahrungsmittelprodukt aus Suppen, Soßen, Mayonnaisen, Milchprodukten, Desserts und Getränken ausgewählt ist.

## Revendications

1. Auxiliaire culinaire liquide automoussant, à l'exclusion d'agents blanchissants, comprenant :
un premier constituant liquide comprenant un constituant acide comestible ; et
un second constituant liquide comprenant un sel consistant en un carbonate ou bicarbonate comestible ou une de leurs associations ;
les premier et second liquides étant stables à la conservation et étant associés de manière fonctionnelle de telle sorte que, lorsque les premier et second liquides sont combinés, du dioxyde de carbone se dégage pour faciliter la formation de la mousse afin que, lorsque les constituants de l'auxiliaire culinaire liquide sont combinés, l'auxiliaire culinaire fonde ou se disperse en moins d'environ 20 secondes dans un produit alimentaire et confère une texture mousseuse au produit alimentaire.

2. Auxiliaire culinaire suivant la revendication 1,
dans lequel les premier et second liquides sont chacun stables à la conservation et physiquement séparés au cours du stockage.

3. Auxiliaire culinaire suivant la revendication 1 ou 2,
dans lequel ledit au moins un des premier et second liquides comprend au moins un agent struturant.

4. Auxiliaire culinaire suivant l'une quelconque des revendications 1 à 3,
dans lequel les premier et second constituants liquides comprennent au moins un agent structurant.

5. Auxiliaire culinaire suivant la revendication 3 ou 4,
dans lequel l'agent structurant est une solution choisie parmi des solutions de gomme xanthane, de protéines et de polysaccharides.

6. Auxiliaire culinaire suivant l'une quelconque des revendications précédentes,
dans lequel au moins un des premier et second liquides comprend en outre une solution de protéine ou une solution de polysaccharide ou bien ces deux solutions.

7. Auxiliaire culinaire suivant la revendication 5 ou 6,
dans lequel la solution de protéine comprend un lait en poudre, un isolat de protéines du petit-lait, du petit-lait doux en poudre, du petit-lait acide en poudre ou du caséinate de calcium, ou une de leurs associations, et la solution de polysaccharide comprend de la maltodextrine.

8. Auxiliaire culinaire suivant l'une quelconque des revendications précédentes,
dans lequel les premier et second liquides ont chacun une teneur totale en matières solides de 0,01 % à environ 50 %.

9. Auxiliaire culinaire suivant l'une quelconque des revendications précédentes,
dans lequel le premier liquide comprend une solution de maltodextrine ayant une teneur totale en matières solides d'environ 1 % à 40 %.

10. Auxiliaire culinaire suivant l'une quelconque des revendications précédentes,
dans lequel le second liquide comprend une solution aqueuse de lait écrémé en poudre ayant une teneur totale en matières solides d'environ 1 % à 60 % ou comprend une solution de protéines rendue basique avec environ 0,5 % à 10 % de sel consistant en carbonate ou bicarbonate, ou d'une de leurs associations, ayant une teneur totale en matières solides d'environ 1 % à 40 %.

11. Auxiliaire culinaire suivant l'une quelconque des revendications précédentes,
dans lequel le constituant acide comprend l'acide citrique, l'acide ascorbique, l'acide tartrique, l'acide fumarique, l'acide alginique, l'acide malique, l'acide succinique, l'acide lactique, la gomme arabique, une pectine à basse teneur en groupes méthoxy, une pectine à haute teneur en groupes méthoxy, la gluconodeltalactone, l'acide polygalacturonique, le monohydrate de phosphate monocalcique, le phosphate monocalcique, le phosphate de sodium, le phosphate de potassium ou une de leurs associations, et
dans lequel les sels consistant en carbonates et bicarbonates comprennent le carbonate de sodium, le bicarbonate de sodium, le carbonate de potassium, le bicarbonate de potassium, le bicarbonate d'ammonium, le carbonate de magnésium, le carbonate de calcium ou une de leurs associations.

12. Auxiliaire culinaire suivant l'une quelconque des revendications précédentes, dans lequel le produit alimentaire est choisi entre des soupes, des sauces, une mayonnaise, des produits laitiers, des desserts et des boissons.

13. Auxiliaire culinaire suivant l'une quelconque des revendications précédentes, dans lequel les premier et second liquides sont placés dans des compartiments séparés d'un récipient unique non mis sous pression.

14. Auxiliaire culinaire suivant l'une quelconque des revendications précédentes, dans lequel au moins un des constituants consistant en le constituant acide comestible et le sel comestible est encapsulé avec un enrobage à base de matière grasse qui a un point de fusion d'au moins environ 25°C et qui est au moins substantiellement dépourvu de matière grasse en microparticules.

15. Auxiliaire culinaire suivant l'une quelconque des revendications précédentes, dans lequel l'enrobage comprend un ou plusieurs agents consistant en des monoglycérides, des diglycérides, des triglycérides, des esters d'acide acétique de mono- ou diglycérides, des esters d'acide lactique de mono- ou diglycérides, des stéaroyllactylates de sodium, des esters d'acide diacétyltartrique de mono- ou diglycérides, des esters de saccharose, la lécithine ou des esters de propylèneglycol d'acides gras, des cires, des alcools gras ou une de leurs associations.

16. Auxiliaire culinaire suivant l'une quelconque des revendications précédentes, dans lequel au moins un constituant de l'auxiliaire culinaire fait partie d'un produit alimentaire.

17. Distributeur automatique qui comprend et distribue une pluralité de produits dont au moins l'un comprend l'auxiliaire culinaire de l'une quelconque des revendications précédentes.

18. Procédé pour fournir un produit alimentaire en mousse, qui comprend :
la combinaison des premier et second constituants liquides de l'auxiliaire culinaire de l'une quelconque des revendications 1 à 16 pour engendrer une quantité suffisante de dioxyde de carbone pour faciliter la formation d'une mousse de l'auxiliaire culinaire, et
la combinaison d'une quantité suffisante de l'auxiliaire culinaire avec des constituants alimentaires pour fournir un produit alimentaire en mousse, avec un effet de blanchiment de celui-ci.

19. Procédé suivant la revendication 18,
dans lequel les premier et second constituants de l'auxiliaire culinaire liquide provoquent un automoussage de l'auxiliaire culinaire avant la combinaison avec le produit alimentaire pour fournir le produit alimentaire en mousse.

20. Procédé suivant la revendication 18 ou 19,
dans lequel le produit alimentaire est choisi entre des soupes, des sauces, la mayonnaise, des produits laitiers, des desserts et des boissons.

21. Utilisation d'un auxiliaire culinaire liquide automoussant de l'une quelconque des revendications 1 à 16 pour le moussage d'un produit alimentaire.

22. Utilisation suivant la revendication 21,
dans laquelle le produit alimentaire est choisi entre des soupes, des sauces, la mayonnaise, des produits laitiers, des desserts et des boissons.
